# EUROPEAN PATENT APPLICATION

(11) **EP 4 745 789 A1**
(43) Date of publication of application: **20.05.2026**
(21) Application number: 25188718.8
(22) Date of filing: 10.07.2025
(51) Int. Cl.: G06F 12/0815, G06F 12/084, G06F 12/1072

(54) **DEVICE AND METHOD WITH REDUCTION OF CACHE LINE FETCHES**

(30) Priority: 19.11.2024 KR 20240165062
(71) Applicant: Samsung Electronics Co., Ltd., Suwon-si, Gyeonggi-do 16677 (KR)
(72) Inventor: Choi, Jungsik, 16678 Suwon-si, Gyeonggi-do (KR); Yoon, Seok-Young, 16678 Suwon-si, Gyeonggi-do (KR)
(74) Representative: Grünecker Patent- und Rechtsanwälte PartG mbB

(57) **Abstract**

An method includes: generating, by a first node, an instruction to store data of the first node at a virtual address in a virtual memory; determining, by the first node, according to the virtual address, whether a cache block corresponding to the virtual address is stored in a cache of the first node; based on the determining indicating that a cache block corresponding to the virtual address is not stored in the cache of the first node, generating, in the first node, a target cache block including the data; and updating, by the second node, a cache block stored in a cache of the second node, where the cache block in the cache of the second node corresponds to the virtual address, and where the updating is based on the target cache block.

## Description

### BACKGROUND

### 1. Field

The following description relates to a method and device with cache lines fetch minimization.

### 2. Description of Related Art

Global shared memory (GSM) is a technology that provides a virtual memory shared by a set of nodes. In practice, a GSM may be a distributed memory, but an individual application may see the GSM as a local memory. That is, the global nature of the memory may be transparent to the application. The participating nodes may access the GSM by using general load/store instructions. The participating nodes may be independent computing devices (e.g., each having their own operating system) that compose an electronic device. For example, when the electronic device is a cluster system, a node may be a single computer that constitutes the cluster system.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The invention is what is claimed in the independent claims. Preferred embodiments are specifies in the dependent claims.

In one general aspect, an operating method of a compute cluster including a first node and a second node sharing a virtual memory, the operating method including: generating, by the first node, an instruction to store data of the first node at a virtual address in the virtual memory; determining, by the first node, according to the virtual address of the instruction, whether a cache block corresponding to the virtual address of the instruction is stored in a cache of the first node; based on the determining indicating that a cache block corresponding to the virtual address is not stored in the cache of the first node, generating, in the first node, a target cache block including the data, wherein the target cache block is stored in the cache of the first node; and updating, by the second node, a cache block stored in a cache of the second node, wherein the cache block in the cache of the second node corresponds to the virtual address, and wherein the updating is based on the target cache block.

The target cache block may include: a data field that stores the data; a global field that indicates whether a location of the cache block exists outside the first node, wherein the updating of the cache block in the cache of the second node may be based on the global field; and a vector field that may indicate a location within the data field where the data is stored.

The generating of the target cache block may include: storing the data in the data field; setting a bit value corresponding to the location within the data field at which the data is stored; and setting a bit value of the global field.

The generating of the target cache may be based on determining that an empty storage space exists in the cache of the first node, and the target cache block may be stored in the empty storage space.

The generating of the target cache block may include: based on determining that an empty storage space does not exist in the cache of the first node, removing one of cache blocks stored in the cache of the first node and storing the generated target cache block into a space from which the one of the cache blocks has been removed.

The updating of the cache block in the cache of the second node, based on the target cache block, may include: updating only the data included in the target cache block.

The updating of the cache block in the cache of second node, based on the target cache block, may include: based on a vector field indicating a location in which the data is stored within a data field of the target cache block, determining a location to be updated and updating the data to be updated, in a data field of the cache block, to the data.

The operating method may further include: in response to the first node executing a target application configured to perform a sequential write, storing sequentially generated data in the target cache block sequentially; and updating the cache block in the cache of the second node based on the target cache block, in response to a data field of the target cache block being filled with the sequentially generated data.

A non-transitory computer-readable storage medium stores instructions that, when executed by a processor, cause the processor to perform any of the methods.

In another general aspect, an operating method of a computing device includes: receiving or generating, by the computing device, an instruction to store data of the computing device at a virtual address in a virtual memory shared by the computing device and a target computing device; determining, according to the virtual address, whether a cache block corresponding to the virtual address is stored in a cache of the computing device; based on the determining indicating that a cache block corresponding to the virtual address is not stored in the cache of the first node, generating a target cache block including the data and storing the target cache block in the cache of the computing device; and updating a cache block stored in a cache of the target computing device based on the target cache block, the cache block in the cache of the target computing device corresponding to the virtual address.

In another general aspect, an electronic device includes: a first node and a second node configured to share a virtual memory, wherein the first node is configured to: generate an instruction to store data of the first node at a virtual address in the virtual memory; determine, according to the virtual address of the instruction, whether a cache block corresponding to the virtual address is stored in a cache of the first node; based on the determining indicating that a cache block corresponding to the virtual address is not stored in the cache of the first node, generate, in the first node, a target cache block including the data, wherein the target cache block is stored in the cache of the first node; and provide the target cache block to the second node to enable the second node to update a cache block in a cache of the second node, the cache of the second node corresponding to the virtual address.

The target cache block may include: a data field that stores the data; a global field that indicates whether a location of the cache block exists outside the first node, wherein the updating of the cache block in the cache of the second node may correspond to the virtual address, and wherein the updating may be performed according to the target cache block; and a vector field that indicates a location within the data field where the data is stored.

The first node may be configured to: store the data in the data field; set a bit value corresponding to the location within the data field at which the data is stored; and set a bit value of the global field.

The first node may be configured to: in response to an empty storage space existing in the cache of the first node, generate the target cache block in the empty storage space.

The first node may be configured to: in response to an empty storage space not existing in the cache of the first node, remove one of cache blocks stored in the cache of the first node and generate the target cache, which is stored in a space from which the one of the cache blocks stored in the cache has been removed.

The second node may be configured to update the cache block in the cache of the second node with only the data included in the target cache block.

The second node may be configured to: based on a vector field indicating a location in which the data is stored in a data field of the target cache block, determine a location in in a data field of the cache block in the cache of the second node to be updated with the data.

The first node may be configured to: in response to the first node executing a target application configured to perform a sequential write, store sequentially generated data, including the data, into the target cache block sequentially; and update the cache block in the cache of the second node based on the target cache block, in response to a data field of the target cache block being filled with the sequentially generated data.

Other features and aspects will be apparent from the following detailed description, the drawings, and the claims.

### BRIEF DESCRIPTION OF THE DRAWINGS

FIG. 1 illustrates an example configuration of an electronic device, according to one or more embodiments.
FIG. 2 illustrates an example of a global shared memory (GSM), according to one or more embodiments.
FIG. 3 illustrates an example of fetches of a cache block, according to one or more embodiments.
FIG. 4 illustrates an example of false sharing, according to one or more embodiments.
FIG. 5 illustrates an example of a modified bit vector, according to one or more embodiments.
FIG. 6 illustrates an example operating method of an electronic device, according to one or more embodiments.
FIG. 7 illustrates an example cache structure of an electronic device, according to one or more embodiments.
FIG. 8 illustrates an example cache block, according to one or more embodiments.
FIG. 9 illustrates an example target cache block, according to one or more embodiments.
FIG. 10 illustrates an example of an update of a cache block according to a target application, according to one or more embodiments.
FIG. 11 illustrates an example operation of an electronic device, according to one or more embodiments.
FIG. 12 illustrates an example operating method of an electronic device, according to one or more embodiments.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

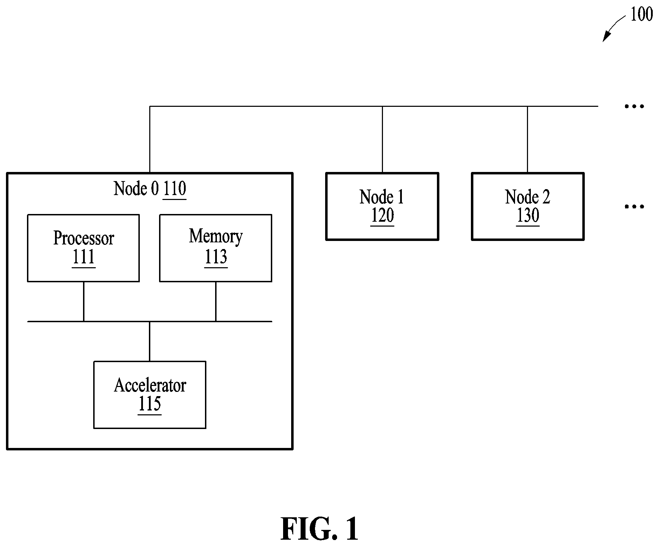

FIG. 1 illustrates an example of a configuration of an electronic device 100 (e.g., a compute cluster), according to one or more embodiments.

The electronic device 100 may include nodes 110, 120, and 130. Each of the nodes 110, 120, and 130 may be an independent computing device (e.g., a node with its own operating system, applications, etc.). The nodes 110, 120, and 130 may communicate with each other, for example, with a switching fabric. For example, the electronic device 100 may be a cluster system, and each of the nodes 110, 120, and 130 may be a server/node. The electronic device 100 may also include other general-purpose components in addition to the components illustrated in FIG. 1.

The following description of components applies to the other nodes.

The node 0 110 may include a processor 111, a memory 113, and an accelerator 115. The processor 111, the memory 113, and the accelerator 115 may communicate with each other through a bus, a network on a chip (NoC), a peripheral component interconnect express (PCIe), and/or the like. The node 0 110 may include other general-purpose components in addition to the components illustrated in FIG. 1.

The processor 111 may perform overall functions for controlling the node 0 110. The processor 111 may generally control the node 0 110 by executing an operating system and programs and/or instructions stored in the memory 113. The processor 111 may be implemented as a central processing unit (CPU), a graphics processing unit (GPU), an application processor (AP), and/or the like that are included in the node 0 110. However, examples are not limited thereto.

The memory 113 may be hardware for storing data processed and data to be processed in the node 0 110. In addition, the memory 113 may store an application, a driver, and the like to be driven by the node 0 110. The memory 113 may include a volatile memory (e.g., dynamic random-access memory (DRAM)) and/or a non-volatile memory.

The node 0 110 may include the accelerator 115 for an operation. The accelerator 115 may process tasks that, due to the characteristics of the tasks, may be more efficiently processed by a separate dedicated processor, such as the accelerator 115, than by a general-purpose processor, such as the processor 111. In this case, one or more processing elements (PEs) included in the accelerator 115 may be used. The accelerator 115 may correspond to, for example, a neural processing unit (NPU), a tensor processing unit (TPU), a digital signal processor (DSP), a GPU, a neural engine, and the like that performs an operation according to a neural network.

The nodes 110, 120, and 130 may share a virtual memory. For example, the nodes 110, 120, and 130 share a virtual memory based on global shared memory (GSM) technology. Since the nodes 110, 120, and 130 may share a virtual memory, all processes on the nodes may use a same address space. The shared virtual memory may be referred to as a GSM. The nodes 110, 120, and 130 may exchange data with each other via the virtual memory (e.g., by reads-from and writes-to the GSM). The virtual memory may be a memory distributed across each node in practice, but an application on any node may interface with the virtual memory as though it were a local memory. Thus, the virtual memory may be accessed using typical load instructions and store instructions. For example, each node may also access data stored in a memory included in another node according to a memory layer.

However, cache coherence between nodes is not guaranteed by the GSM technology.

Next, a virtual memory shared by a set of nodes is described.

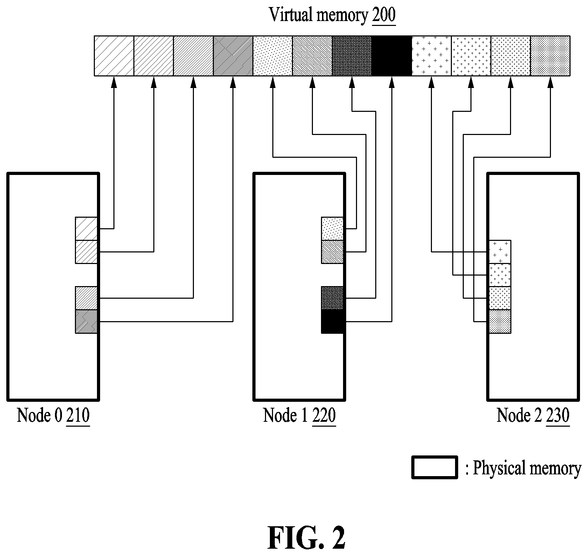

FIG. 2 illustrates an example of a GSM, according to one or more embodiments.

Referring to FIG. 2, a node 0 210, a node 1 220, and a node 2 230 are illustrated. The nodes 210, 220, and 230 may share a virtual memory (e.g., a GSM).

A virtual memory 200 (e.g., a GSM) may represent a virtual memory space shared by the nodes 210, 220, and 230 that share the virtual memory 200. The virtual memory 200 may be physically distributed across multiple nodes in practice. For example, portions of physical memories of the respective nodes 210, 220, and 230 may be allocated to the virtual memory 200.

When an application executed on a specific node uses the virtual memory 200, the application may use (i) a memory in the specific node that is allocated to the virtual memory 200, (ii) a memory in another node that is allocated to the virtual memory 200, and (iii) a private local memory of the specific node. For example, when an application executed on the node 0 210 uses the virtual memory 200, the application may use a memory in the node 0 210 that is allocated to the virtual memory 200, a memory in another node (e.g., the node 1 220 and the node 2 230) that is allocated to the virtual memory 200, and a private local memory of the node 0 210. A private local memory of a node may be a memory that is not allocated to the virtual memory that is in a physical memory of the node.

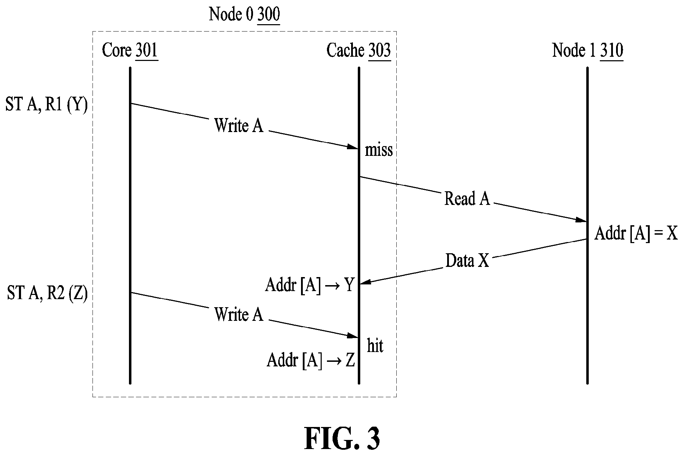

FIG. 3 illustrates an example of fetches of a cache block, according to one or more embodiments.

FIG. 3 illustrates node 0 300 and node 1 310. It is assumed that node 0 300 and node 1 310 are nodes of an electronic device (e.g., the electronic device 100 of FIG. 1) that share a virtual memory. A system (e.g., a compute cluster) that uses a virtual memory may use a write-back cache technique to store data. The write-back technique may include immediate writing of data to a cache and writing of the data to non-cache storage/memory may be deferred. The write-back cache technique may be used together with a write-allocating cache technique. The write-allocating cache technique may involve fetching a cache block (e.g., a cache line) that includes data to be stored into a local cache and subsequently storing the cache block.

For example, referring to FIG. 3, an instruction to store data Y at virtual address A may be generated in a core 301 of node 0 300. Node 0 300 may check whether a cache block corresponding to the virtual address A is already stored in node 0's cache 303. A write hit occurs when the cache block corresponding to virtual address A is already stored in the cache 303. A write miss occurs when the cache block corresponding to virtual address A is not stored in the cache 303 at the time of the instruction to store data Y.

When a write miss occurs ("miss" in FIG. 3), the node 0 300 may read the cache block corresponding to virtual address A from node 1 310, which is storing the cache block corresponding to virtual address A. For example, node 0 300 may fetch the cache block corresponding to virtual address A from the node 1 310 and store the fetched cache block into node 0's cache 303.

When the cache block corresponding to virtual address A is fetched into the cache 303, the node 0 300 may update data of the fetched (and now locally stored) cache block corresponding to virtual address A from data X to data Y of the previously-mentioned store instruction of core 301.

Thereafter, since the cache block corresponding to virtual address A has been fetched to the cache 303, when an instruction to store data Z at the virtual address A is generated in core 301 of node 0 300, a write hit may occur and data Z may be stored without having to fetch the cache block again.

A node that fetches a cache block from a memory included in another node may be referred to as a cache node or a first node. A node that provides a cache block may be referred to as a home node or a second node. Each node included in an electronic device may be a cache node or a home node, depending on the case (e.g., which operation on which data).

Next, false sharing is described. False sharing may occur when a virtual memory is shared.

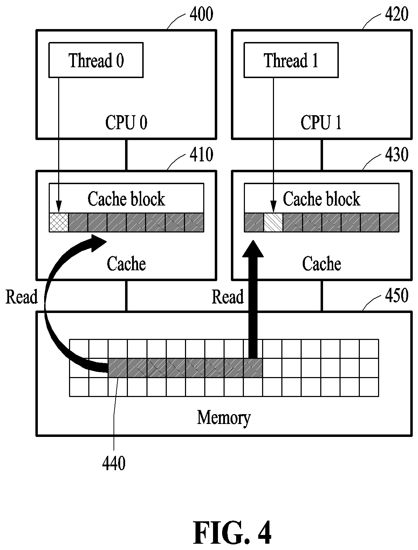

FIG. 4 illustrates an example of false sharing, according to one or more embodiments.

FIG. 4 illustrates CPU 0 400 and CPU 1 420. It is assumed that thread 0 of CPU 0 400 and thread 1 of CPU 1 420 access different data included in a same cache block 440 of a shared virtual memory 450. For example, thread 0 may access first data (checked pattern) in the cache block 440, and the thread 1 may access second data (diagonal pattern) in the cache block 440.

The cache block 440 may be fetched to cache 410 of CPU 0 400 and cache 430 of CPU 420. CPU 0 400 may update the first data in its copy of the cache block 440, and the CPU 1 420 may update the second data in its copy of the cache block 440.

The second data in the copy of the cache block 440 stored in cache 410 (such cache block having been updated by thread 0) may be past data (as when the cache block was written into the cache 410). Similarly, the first data in the copy of the cache block in cache 430 (such cache block having been updated by thread 1) may be the past data (as when the cache block was written into the cache 430).

The copy of the cache block 440 in the cache 410, and the/version copy of the cache block 440 in the cache 430, and the copy/version of the cache block 440 in the shared virtual memory 450 may all correspond to the same cache block but may each include different data, and thus, cache coherence may not be guaranteed.

In addition, when (i) the cache block 440 stored in the shared virtual memory 450 is updated according with the cache block copy stored in cache 410 (as updated by the thread 0), and then (ii) the cache block 440 stored in the shared virtual memory 450 is updated according to the copy of the cache block in cache 430 (as updated by the thread 1), the data updated by the thread 0 may be changed back to the past data (the original first data of the original cache block 440 in the shared virtual memory 450). In this case, false sharing may occur.

The lack of cache coherence and the false sharing described above may occur in an electronic device (e.g., a cluster system) including multiple nodes.

For example, the lack of cache coherence and the false sharing may occur in an electronic device when node 0 and another node (e.g., node 2) access different data included in copies/versions of the same cache block stored in a memory of node 1.

Ensuring cache coherence by using a hardware architecture may have limitations. Thus, a method to ensure cache coherence through software may be used. For example, in timestep symmetric multiprocessing (TSMP), cache coherence may be ensured by updating a cache block of a home node to a cache block of a cache node at determined intervals. However, cache coherence may not be guaranteed within a same cycle in TSMP (e.g., it may take one or more cycles for cache coherence to be restored).

Next, a method of updating only a portion of data in a cache block in a GSM is described.

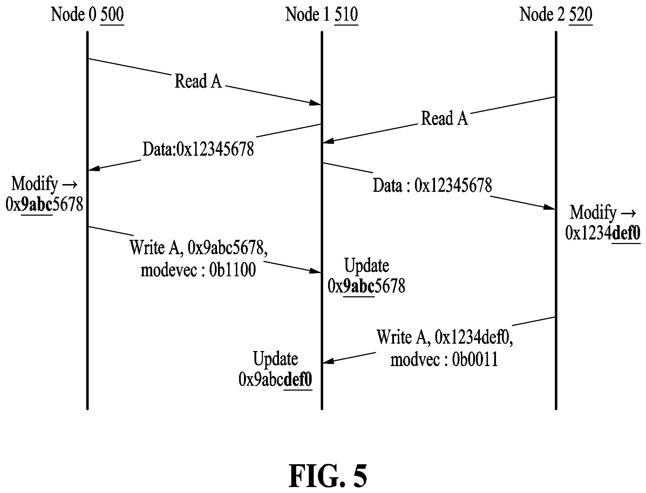

FIG. 5 illustrates an example of a modified bit vector, according to one or more embodiments. Here, "modified" refers to modification of data represented by the bit vector, not modification of the bit vector itself.

In a GSM by which a set of nodes of an electronic device (e.g., a compute cluster comprised of the nodes) shares a virtual memory, a modified bit vector may be used to prevent the false sharing described above. The modified bit vector may be a vector that manages, in units of words, whether pieces of data in a cache block (respectively corresponding to the bits in the bit vector) have been updated.

For example, suppose that node 0 500 fetches a cache block corresponding to virtual address A from a node 1 510 and a node 2 520 fetches the same cache block corresponding to virtual address A from the node 1 510. The cache block corresponding to virtual address A may include data (e.g., 0x12345678, digits representing/comprising respective words (or pairs of words) in the cache block).

Node 0 500 may modify the data in its cache block to 0x**9abc**5678. Only a portion of the data in the cache block is modified (the portion now storing two leading words"9abc"). Node 2 520 may modify only a portion the data in its cache block to 0x1234**def0** (the portion now storing two trailing words "def0"). Each node updates data in its cache block in units of words rather than in units of cache blocks.

The node 0 500 may update its modified bit vector from 0b0000 to 0b1100 to indicate that data located at 1st to 4th positions/words of the data in the cache block has been updated.

The cache block of the node 1 510, which is the home node in this example, may be updated based on the updated cache block of the node 0 500, and the updating may be based on node 1's 510 modified bit vector. Specifically, based on the modified bit vector (e.g., 0b1100), the data located at the 1st to 4th positions of the data (based on the positions of the 1's in node 1's modified bit vector) in the copy of the cache block in node 1 510, but, in this example, the entire cache block of the node 1 510 is not updated. For example, the data in the copy of the cache block in the node 1 510 may be updated from 0x12345678 to 0x9abc5678.

With timing as indicated in FIG. 5, node 2 520 may update its modified bit vector from 0b0000 to 0b0011 to indicate that data located at 5th to 8th positions/words of the data in its cache block has been updated.

The cache block of the node 1 510, the home node in this example, may be updated based on the updated cache block of the node 2 520. Based on the modified bit vector (e.g., 0b0011), the data located at the 5th to 8th positions/words of the data in the cache block of the node 1 510, but not the entire cache block of the node 1 510, may be updated with the data of node 2's cache block that corresponds to the 1s in Node 2's modified bit vector. For example, the data in the cache block of the node 1 510 may be updated from 0x9abc5678 to 0x9abc**def0.**

In a GSM in which a set of nodes of an electronic device shares a virtual memory, the false sharing described above may be prevented by using a modified bit vector.

In addition, the write-allocating cache technique may cause large overhead in a GSM. For a store instruction to be performed using the write-allocating cache technique, the entire cache block corresponding to the virtual address A may need to be fetched to perform the store instruction. A typical store instruction may update one word (e.g., 4 bytes), and a typical cache block may be 16 words (e.g., 64 bytes) in size.

The write-allocating cache technique may incur significant overhead as the entire cache block may need to be fetched to update a single word. Accordingly, a store buffer and a write buffer have been used to alleviate this issue even in a general system, which is different from a GSM that shares a virtual memory.

A GSM system may incur larger write-allocating cache overhead than existing non-GSM systems. This is because a cache block that needs to be fetched when executing a store command may be stored in another node in the GSM system. In addition, when a target application being executed is a high-performance computing (HPC) application or an artificial intelligence (AI) application, a large amount of data may be updated at once, sequentially. In this case, the entire cache block may be fetched while causing large overhead, but the entire cache block may be completely overwritten, resulting in unnecessary data being fetched. Thus, to optimize performance of the GSM, fetching of the entire cache block may need to be minimized when using the write-allocating cache technique.

Described next is a method of minimizing fetching of an entire cache block by using a modified bit vector in a GSM shared by a set of nodes sharing a virtual memory.

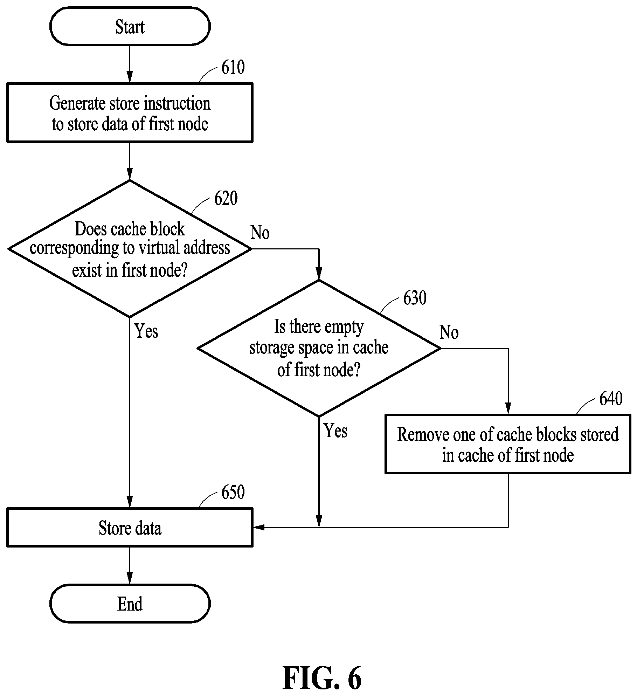

FIG. 6 illustrates an example of an operating method of an electronic device, according to one or more embodiments.

Operations 610 to 650 may be performed by the electronic device 100.

In operation 610, a store instruction to store data of a first node may be generated by the first node.

The data of the first node may be a result of performing a specific operation at a core of the first node. The store instruction may be an instruction to store data which corresponds to a cache block corresponding to a virtual address into which the first node is storing data thereof. The first node may be a node to store data therein and may be referred to as a cache node.

In operation 620, the first node may determine whether the cache block corresponding to the virtual address exists in the first node.

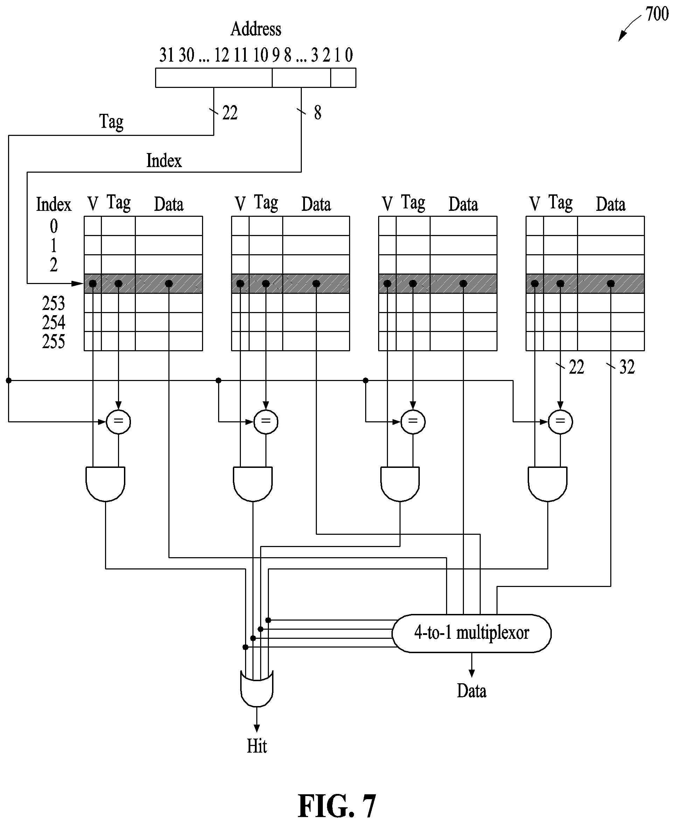

The method by which the first node determines, using the virtual address, whether the cache block corresponding to the virtual address exists in the first node is described below with reference to FIG. 7.

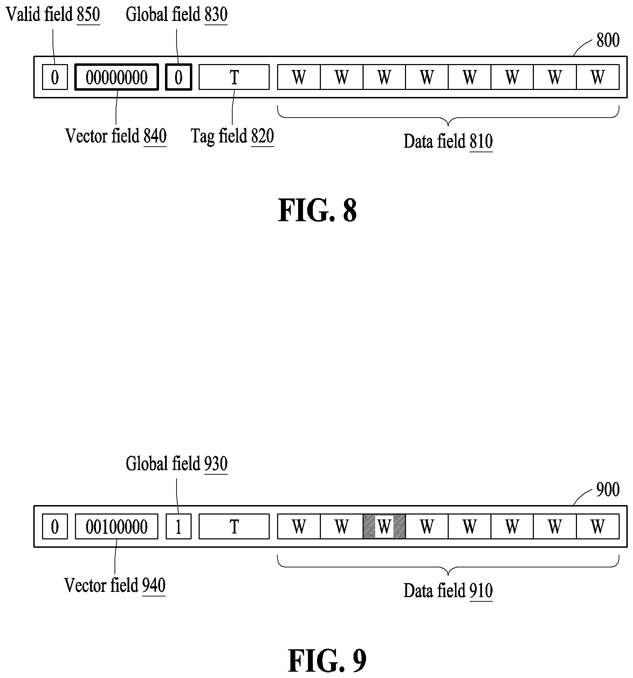

When it is determined in operation 620 that the cache block corresponding to the virtual address exists in the first node, operation 650 (storing the data) may be directly performed; the first node may store data in the cache block corresponding to the virtual address, and the first node may update a vector field and a global field as the first node updates the cache block corresponding to the virtual address. A method of updating a vector field and a global field is described below with reference to FIGS. 8 and 9.

When it is determined in operation 620 that the cache block corresponding to the virtual address does not exist in the first node, operation 630 may be performed.

In operation 630, the first node may determine whether there is an empty storage space in the cache of the first node.

The first node may perform operation 650 when there is an empty storage space in the cache of the first node. For example, the first node may generate a new target cache block in the empty storage space. The first node may store data in the generated target cache block, and update the corresponding vector field and the global field as the data is stored in the new target cache block.

The first node may perform operation 640 when there is no empty storage space in the cache of the first node.

In operation 640, the first node may evict one of cache blocks stored in the cache of the first node. Specifically, the first node may evict one of the cache blocks according to a policy for evicting cache blocks. For example, the first node may remove an oldest cache block from among the cache blocks stored in the cache of the first node. For example, the first node may remove, from among the cache blocks, a cache block that was least recently used. The least-recently-used method of removing a cache block is a non-limiting example.

The first node may generate the new target cache block at the location in its cache from which the cache block was removed. The first node may store data in the generated target cache block, and update the vector field and the global field as the data is stored.

In operation 650, data may be stored.

As the data is stored in the cache block, the first node may update fields related to the storing of the data. The fields related to the storing of the data are described below with reference to FIG. 8.

The cache block of the second node may be updated based on the target cache block (in the first node) in which the data is stored. According to conventional technology, the second node may be referred to as a home node as the second node is a node from which the cache block is fetched to the first node. The cache block of the second node being updated may be the cache block corresponding to the virtual address. In the cache block of the second node, only data corresponding to the word(s)/position(s) of the data stored into the target cache block (by the first node) may be updated. The updating of the second node is described below with reference to FIG. 9.

According to the above-described operations, in a GSM by which a set of nodes shares a virtual memory, fetching a cache block from the second node may be omitted by generating the target cache block in the first node, thereby reducing overhead. In the GSM by which a set of nodes shares a virtual memory, when updating the cache block of the second node based on the target cache block, only the data corresponding to the data stored in the target cache block may be updated to another node (e.g., the home node), thereby reducing an unnecessary overwrite.

FIG. 7 illustrates an example of a cache structure of an electronic device, according to one or more embodiments.

Referring to FIG. 7, a four-way set-associative cache 700 is illustrated, which is one of various cache structures that may be used with the methods of minimizing fetching of cache blocks described herein. The four-way set-associative cache 700 may manage caches by dividing the caches into four sets. The following description may apply to various other types of cache structures. The cache structure illustrated in FIG. 7 may be a cache structure of a first node, and other nodes may have a similar cache structure.

The first node may generate a store instruction to store data of the first node, which may be performed into a cache block corresponding to virtual address 710 of the store instruction. The first node may use the virtual address 710 to determine whether a cache block corresponding to the virtual address 710 is stored in the cache of the first node.

Assuming that the virtual address 710 is a 32-bit address, the first node may determine whether a cache block corresponding to the virtual address 710 is stored in the cache of the first node by using an 8-bit index portion and a 22-bit tag portion of the virtual address 710. Referring to FIG. 7, although only a valid field (V), a tag field, and a data field are shown in the cache blocks stored in the four sets of caches, the cache blocks may include various other fields. For example, each cache block may include a respective vector field (e.g., a modified bit vector as per FIG. 5), each having bits indicating locations of respective pieces of updated data in the corresponding data field.

A write miss may be determined to occur when it is determined that there is no cache block in the set-associative cache 700 that matches the 8-digit index bit and the 22-digit tag bit of the virtual address 710. When a write miss occurs, operation 630 of FIG. 6 may be performed.

A write hit may be determined to occur when it is determined that there is a cache block that matches the 8-digit index bit and the 22-digit tag bit of the virtual address 710. When a write hit occurs, operation 650 of FIG. 6 may be performed.

As described above with reference to FIG. 5, a modified bit vector may be used in a GSM to prevent false sharing. A modified bit vector may correspond to a vector field. A modified bit vector may be used to manage a target cache block. By using a modified bit vector to prevent false sharing, a cache block may be managed without necessarily having to change a cache structure.

The AND gates and equality checker ("=" components) shown in FIG. 7 perform their ordinary functions and are used to determine whether a cache hit occurs and, when a hit occurs, to combine data (by the multiplexor) data fields from the four caches into one final data.

Described next is a method of managing a target cache block by using the modified bit vector.

FIG. 8 illustrates an example of a cache block 800, according to one or more embodiments.

The cache block 800 may be stored in a cache of a first node. The cache block 800 may include a valid field 850, a vector field 840, a global field 830, a tag field 820, and a data field 810.

The valid field 850 may include a valid bit. A valid bit may indicate whether the entire cache block 800 is valid or invalid. When the valid field 850 is 1, it may indicate that the entire cache block 800 is valid. For example, when the cache block 800 is fetched from a second node to the first node, the valid field 850 may be 1. When the valid field 850 is 0, it may indicate that at least some of the cache block 800 is invalid.

The vector field 840 may correspond to the modified bit vector described above with reference to FIG. 5. The number of bits in the vector field 840 may correspond to the number of words in the data field 810. Bits in the vector field 840 may indicate respective locations in which target data is stored in the data field 810. The vector field 840 may indicate a location in which valid data is stored in the data field 810. For example, when the vector field 840 includes 0001000, it may indicate that only a fourth word in the data field 810 is valid.

The global field 830 of each cache block may indicate whether the corresponding cache block 800 corresponds to a virtual memory (e.g., a GSM) area. For example, the global field 830 may indicate whether a location of a cache block to be updated based on the cache block 800 exists outside the first node.

The tag field 820 of a cache block may indicate a location of the cache block in a cache.

The data field 810 of a cache block may store data of the cache block. The data field 810 may store data in units of words, as a non-limiting example. The data field 850 may store 16 words, as a non-limiting example. For description only, it is assumed herein that eight words may be stored.

Since the vector field 840 may be used to indicate validity statuses of respective words included in the corresponding data field 850, a number of bits in the vector field 840 may correspond to a number of words in the data field 810. For example, when a third word in the data field 850 is updated, a third bit in the vector field 840 may be updated to 1.

FIG. 9 illustrates an example of a target cache block 900, according to one or more embodiments.

According to an example, a store instruction having a virtual address targeted for storing may be generated to store data of a first node in a cache block corresponding to the virtual address. For example, the store instruction may be an instruction to store a result of a specific operation into a virtual address that maps to a third word of a cache block. The first node may determine whether the cache block corresponding to the virtual address is stored in a cache of the first node. When the cache block is determined to not be stored in the cache of the first node, a target cache block 900 may be generated by the first node and stored in the first node's cache. In generating the target cache block 900, the first node may store data in a data field 910, set, in a vector field 940, a bit value corresponding to a location of the data field 910 in which the data is stored, and set a bit value of a global field 930. For example, the first node may store data in the third word of the data field 910 according to the store instruction, set the bit value of the vector field 940 corresponding to the third word to 1, and when the target cache block 900 corresponds to a virtual memory area, set the bit value to 1, thus generating the target cache block 900.

According to an example, a store instruction may be generated to store data of the first node in the cache block corresponding to the virtual address of the store instruction. For example, the store instruction may be an instruction to store a result of a specific operation, which may map to a third word of the corresponding cache block. The first node may determine whether the cache block corresponding to the virtual address is stored in the cache of the first node. When the cache block is stored in the cache of the first node, the first node may update the cache block by storing data into a data field of that cache block, setting a bit value corresponding to a location of the data field in which the data is stored, and setting a bit value of a global field. For example, the first node may update the cache block by storing data in the third word of the data field according to the store instruction, setting a bit value of a vector field corresponding to the third word to 1, and when the cache block corresponds to a virtual memory area, setting the bit value to 1.

According to an example, a cache block of a second node may be updated based on the target cache block 900. The cache block of the second node may correspond to the virtual address, and would need to be fetched to the first node according to conventional technology (e.g., because the conventional first node would not be able to generate its own new cache blocks). The second node may receive the target cache block 900 from the first node. The second node may update the cache block based on the data field 910 and the vector field 940 of the target cache block 900. The second node may determine a location to update in a data field of a cache block based on the vector field 940 indicating a location in which data is stored in the data field 910 of the target cache block 900. The second node may update data in the determined location to data in the corresponding data field 910.

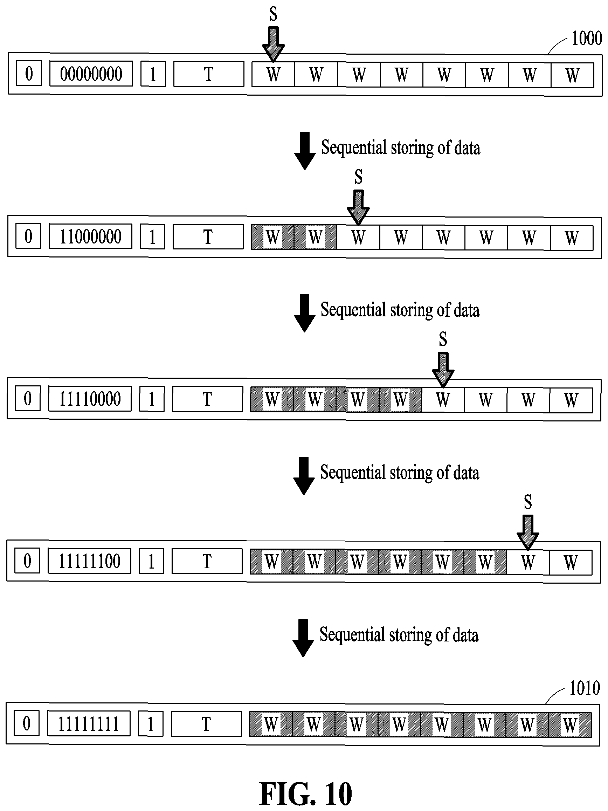

FIG. 10 illustrates an example of an update of a cache block according to a target application, according to one or more embodiments.

An HPC application such as an Al application, for example, may perform a sequential write. Sequential accesses to data may occur according to the sequential write and accordingly, prefetching of the data (e.g., a cache block) may be easier. However, when a corresponding sequential write is performed, a fetched cache block may be overwritten. For example, it may be considered that unnecessary data transmission is performed by fetching a cache block including data that may not be used.

According to the method described above with reference to FIGS. 6 to 9, data may be stored without fetching a cache block from another node, e.g., by generating new cache blocks.

In an example, it may be assumed that a first node executes a target application that performs a sequential write. The first node may determine whether a cache block for storing sequentially generated data is stored in a cache of the first node. When the cache block is stored in the cache of the first node (e.g., as copied from another node), the first node may sequentially store the sequentially generated data in the cache block. The first node may transmit the cache block to a second node when the data field of the corresponding cache block is filled with the sequentially generated data. The second node may update the cache block of the second node based on the received cache block.

In an example, it may be assumed that a first node executes a target application that performs a sequential write. The first node may determine whether the cache block for storing the sequentially generated data is stored/available in the cache of the first node at the time of the sequential write. When the cache block is not stored in the cache of the first node, the first node may generate a target cache block. The method of generating a target cache block is described above with reference to FIG. 6. The first node may sequentially store the sequentially generated data in the target cache block. The first node may transmit the target cache block to the second node when a data field of the target cache block is filled with the sequentially generated data. The second node may update the cache block of the second node based on the received target cache block.

For example, the sequentially generated data may be sequentially stored in a data field of a target cache block 1000. A vector field may be sequentially updated as the sequentially generated data is sequentially stored in the target cache block 1000, as shown in FIG. 10. When the data field is filled with data, the target cache block 1010 may be transmitted to the second node.

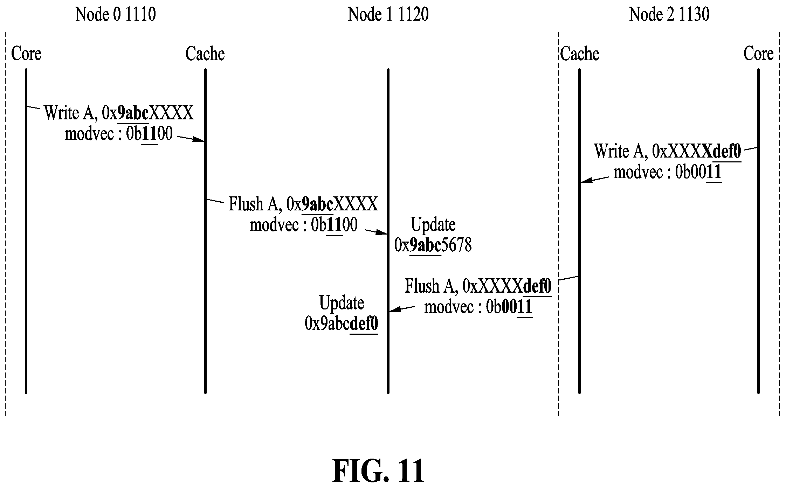

FIG. 11 illustrates an example of an operation of an electronic device, according to one or more embodiments.

Referring to FIG. 11, node 0 1110, node 1 1120, and node 2 1130 are illustrated. It may be assumed that node 0 1110, node 1 1120, and node 2 1130 are nodes of an electronic device that share a virtual memory.

In a core of the node 0 1110, an instruction may be generated to store data (e.g., 0x9abcxxxx), which may be implemented with a cache block corresponding to the virtual address A. The cache block corresponding to the virtual address A may exist in node 1 1120 at the time the instruction is generated.

The node 0 1110 may store the cache block corresponding to the virtual address A in the node 0 1110 without fetching the cache block from node 1 1120, by using the method of FIG. 6. For example, a target cache block may be generated and data (e.g., 0x9abcxxxx) may be stored therein.

The target cache block may include a vector field (e.g., 1100). Based on the vector field, it may be confirmed that only "9abc" of the data (e.g., 0x9abcxxxx) is stored in the target cache block. For example, "xxxx" may be an invalid value that is a residual of the generation of the cache block.

Node 0 1110 may write the target cache block of node 0 1110 to node 1 1120. Specifically, the node 0 1110 may transmit the target cache block including the vector field (e.g., 1100) and the data (e.g., 0x9abcxxxx) to node 1 1120.

Node 1 1120 may update its version of the cache block corresponding to the virtual address A, based on the received target cache block. For example, the node 1 1120 may update first four digits of a data field of the cache block corresponding to the virtual address A to "9abc," based on the vector field and the data.

In a core of node 2 1130, an instruction may be generated to store data (e.g., 0xxxxxdef0) in the cache block corresponding to the virtual address A. The cache block corresponding to the virtual address A may exist in node 1 1120 at the time this instruction is generated.

Node 2 1110 may store the cache block corresponding to the virtual address A in the node 2 1130 without fetching the cache block from the node 1 1120, by using the method of FIG. 6. For example, a target cache block may be generated and data (e.g., 0xxxxxdef0) may be stored therein.

The target cache block may include a vector field (e.g., 0011). Based on the vector field, it may be confirmed that only "def0" of the data (e.g., 0xxxxxdef0) is stored in the target cache block. For example, "xxxx" may be an invalid value.

Node 2 1130 may write a target cache block of node 2 1130 into node 1 1120. Node 0 1110 may transmit the target cache block including the vector field (e.g., 0011) and the data (e.g., 0xxxxxdef0) to node 1 1120.

Node 1 1120 may update the cache block corresponding to the virtual address A, based on the received target cache block. For example, node 1 1120 may update last four digits of the data field of the cache block corresponding to the virtual address A to "def0," based on the vector field and the data.

Thus, the cache block corresponding to the virtual address A of node 1 1120 may store data (e.g., 0x9abcdef0) in the data field.

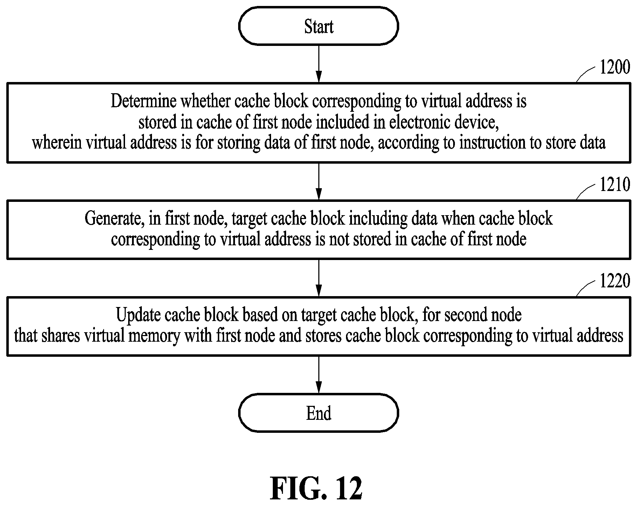

FIG. 12 illustrates an example of an operating method of an electronic device, according to one or more embodiments.

Operations 1200 to 1220 shown in FIG. 12 may be performed by the electronic device 100 of FIG. 1.

In operation 1200, the electronic device may determine whether a cache block corresponding to a virtual address is stored in a cache of a first node included in the electronic device, wherein the virtual address is for storing data of the first node, according to an instruction to store the data.

In operation 1210, the electronic device may generate, in the first node, a target cache block including the data when a cache block corresponding to the virtual address is not stored in the cache of the first node.

In operation 1220, the electronic device may update the cache block based on the target cache block, for a second node that shares a virtual memory with the first node and stores the cache block corresponding to the virtual address.

Operations 1200 to 1220 are described above in detail with reference to FIGS. 1 to 11.

The computing apparatuses, the electronic devices, the processors, the memories, the displays, the information output system and hardware, the storage devices, and other apparatuses, devices, units, modules, and components described herein with respect to FIGS. 1-12 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-12 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as a multimedia card or a micro card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the invention is defined by the enclosed claims.

## Claims

1. An operating method of a compute cluster comprised of a first node and a second node sharing a virtual memory, the operating method comprising:
generating, by the first node, an instruction to store data of the first node at a virtual address in the virtual memory;
determining, by the first node, according to the virtual address of the instruction, whether a cache block corresponding to the virtual address of the instruction is stored in a cache of the first node;
based on the determining indicating that a cache block corresponding to the virtual address is not stored in the cache of the first node, generating, in the first node, a target cache block comprising the data, wherein the target cache block is stored in the cache of the first node; and
updating, by the second node, a cache block stored in a cache of the second node,
wherein the cache block in the cache of the second node corresponds to the virtual address, and wherein the updating is based on the target cache block.

2. The operating method of claim 1, wherein the target cache block comprises:
a data field that stores the data;
a global field that indicates whether a location of the cache block exists outside the first node, wherein the updating of the cache block in the cache of the second node is based on the global field; and
a vector field that indicates a location within the data field where the data is stored.

3. The operating method of claim 2, wherein the generating of the target cache block comprises:
storing the data in the data field;
setting a bit value corresponding to the location within the data field at which the data is stored; and
setting a bit value of the global field.

4. The operating method of one of claims 1 to 3, wherein the generating of the target cache is based on determining that an empty storage space exists in the cache of the first node, and wherein the target cache block is stored in the empty storage space.

5. The operating method of one of claims 1 to 4, wherein the generating of the target cache block comprises:
based on determining that an empty storage space does not exist in the cache of the first node, removing one of cache blocks stored in the cache of the first node and storing the generated the target cache block into a space from which the one of the cache blocks has been removed.

6. The operating method of one of claims 1 to 5, wherein the updating of the cache block in the cache of the second node, based on the target cache block, comprises:
updating only the data included in the target cache block.

7. The operating method of claim 6, wherein the updating of the cache block in the cache of second node, based on the target cache block, comprises:
based on a vector field indicating a location in which the data is stored within a data field of the target cache block, determining a location to be updated and updating the data to be updated, in a data field of the cache block, to the data.

8. The operating method of one of claims 1 to 7, further comprising:
in response to the first node executing a target application configured to perform a sequential write, storing sequentially generated data in the target cache block sequentially; and
updating the cache block in the cache of the second node based on the target cache block, in response to a data field of the target cache block being filled with the sequentially generated data.

9. A non-transitory computer-readable storage medium storing instructions that, when executed by a processor, cause the processor to perform an operating method of a computing device, the operating method comprising:
receiving or generating, by the computing device, an instruction to store data of the computing device at a virtual address in a virtual memory shared by the computing device and a target computing device;
determining, according to the virtual address, whether a cache block corresponding to the virtual address is stored in a cache of the computing device;
based on the determining indicating that the cache block corresponding to the virtual address is not stored in the cache of the first node, generating a target cache block comprising the data and storing the target cache block in the cache of the computing device; and
updating a cache block stored in a cache of the target computing device based on the target cache block, the cache block in the cache of the target computing device corresponding to the virtual address.

10. An electronic device comprising:
a first node and a second node configured to share a virtual memory,
wherein the first node is configured to:
generate an instruction to store data of the first node at a virtual address in the virtual memory;
determine, according to the virtual address of the instruction, whether a cache block corresponding to the virtual address is stored in a cache of the first node;
based on the determining indicating that a cache block corresponding to the virtual address is not stored in the cache of the first node, generate, in the first node, a target cache block comprising the data, wherein the target cache block is stored in the cache of the first node; and
provide the target cache block to the second node to enable the second node to update a cache block in a cache of the second node, the cache of the second node corresponding to the virtual address.

11. The electronic device of claim 10, wherein the target cache block comprises:
a data field that stores the data;
a global field that indicates whether a location of the cache block exists outside the first node, wherein the updating of the cache block in the cache of the second node corresponds to the virtual address, and wherein the updating is performed according to the target cache block; and
a vector field that indicates a location within the data field where the data is stored.

12. The electronic device of claim 11, wherein the first node is configured to:
store the data in the data field;
set a bit value corresponding to the location within the data field at which the data is stored; and
set a bit value of the global field.

13. The electronic device of one of claims 10 to 12, wherein the first node is configured to:
in response to an empty storage space existing in the cache of the first node, generate the target cache block in the empty storage space, or
in response to an empty storage space not existing in the cache of the first node, remove one of cache blocks stored in the cache of the first node and generate the target cache, which is stored in a space from which the one of the cache blocks stored in the cache has been removed.

14. The electronic device of one of claims 10 to 13, wherein the second node is configured to update the cache block in the cache of the second node with only the data included in the target cache block,
wherein the second node is preferably configured to based on a vector field indicating a location in which the data is stored in a data field of the target cache block, determine a location in in a data field of the cache block in the cache of the second node to be updated with the data.

15. The electronic device of one of claims 10 to 14, wherein the first node is configured to:
in response to the first node executing a target application configured to perform a sequential write, store sequentially generated data, including the data, into the target cache block sequentially; and
update the cache block in the cache of the second node based on the target cache block, in response to a data field of the target cache block being filled with the sequentially generated data.
